# EUROPÄISCHE PATENTANMELDUNG

(11) **EP 0 978 773 A1**
(43) Veröffentlichungstag der Anmeldung: **09.02.2000**
(21) Anmeldenummer: 99115323.0
(22) Anmeldetag: 03.08.1999
(51) Int. Cl.: G05B 19/10

(54) **Programmgesteuertes Haushaltgerät**

(30) Priorität: 05.08.1998 DE 19835440
(71) Anmelder: BSH Bosch und Siemens Hausgeräte GmbH, 81669 München (DE)
(72) Erfinder: Bergemann, Heinz-Jürgen, 81543 München (DE)

(57) **Zusammenfassung**

Programmgesteuertes Haushaltgerät mit elektrischer, elektronischer oder programmgesteuerter Sicherungsfunktion gegen unbefugtes Benutzen des Haushaltgerätes, gegebenenfalls auch gegen unbefugtes Abschalten von Betriebsprogrammen oder des Haushaltgerätes.

## Beschreibung

Die Erfindung betrifft ein programmgesteuertes Haushaltgerät mit einer Steuereinrichtung, die mindestens einen Mikroprozessor enthält, und mit manuell betätigbaren Bedienelementen in einer Bedienblende zum Bedienen der Steuereinrichtung und zum Aktivieren von mindestens einem Betriebsprogramm.

Aus der DE 35 43 216 A1 ist ein Haushaltgerät mit einem Bedienelement in Form einer Taste bekannt, in deren Tastenstößel quer zur Stößellängsrichtung eine Nut gebildet ist. In die Nut kann ein Schieber eingreifen, der eine Betätigungsnase zur manuellen Betätigung aufweist. Der Schieber kann nur von einer Person betätigt werden, die über die Funktion des Schiebers informiert ist. Dadurch kann diese Taste nicht von unbefugten Personen, z.B. von Kindern, betätigt werden, wenn der Schieber in die Nut eingreift.

Eine solche mechanische 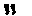 Kindersicherung" ist nur bei kleinen Kindern wirksam, kann jedoch nicht eine mißbräuchliche Benutzung des Haushaltgerätes durch größere Kinder oder Erwachsene verhindern.

Eine mißbräuchliche Benutzung oder Bedienung des Haushaltgerätes braucht nicht nur das mißbräuchliche Einschalten des Haushaltgerätes und die Durchführung von Programmabläufen des Haushaltgerätes beinhalten, sondern auch das mißbräuchliche Ausschalten des Haushaltgerätes oder das mißbräuchliche Unterbrechen von Programmabläufen.

Die Erfindung betrifft alle Arten von Haushaltgeräten, insbesondere Geschirrspüler, Waschmaschinen, Wäschetrockner und in ähnlicher Weise programmgesteuerte Haushaltgeräte.

Aus der DE 44 22 128 A1 ist ein programmgesteuertes Haushaltgerät mit einer Bedienblende bekannt, in welcher Bedienelemente zur Eingabe einzelner Funktionen eines individuellen Betriebsprogrammablaufes durch eine mikroprozessorgesteuerte Steuereinrichtung angeordnet sind. Eine Anpassung der werksseitigen Programmvorgaben an Kundenwünsche ist dadurch möglich, daß die elektronische Steuereinrichtung über eine Dateneingabe- und Datenausgabeeinheit mit einem Display frei programmierbar ist.

Ferner sind Waschmaschinen bekannt, in deren Bedienblenden Bedienelemente, sogenannte Handhaben, zum Einstellen von bestimmten Programmfunktionen angeordnet sind. Logische Verknüpfungen der Bedienungen dieser Bedienelemente sind so eingerichtet, daß eingeweihte Personen, z.B. Kundendiensttechniker, durch Eingabe eines Codes von bestimmten Bedienungshandlungen, nämlich die Reihenfolge der Betätigung einzelner Bedienungselemente, bestimmte Funktionen oder bestimmte Kundendienst-Programme aufrufen können, deren Verlauf den Kundendiensttechniker bei der Beobachtung der Waschmaschine Aufschlüsse über deren ordnungsgemäßen Betriebsprogrammablauf geben kann, dessen Ablauf seinerseits nämlich für die nötige Beobachtung zu lange dauern würde. Andererseits können durch geeignete Codierungen sogenannte Demonstrationsprogramme aufgerufen werden, bei denen ein bestimmter Betriebsprogrammablauf der Maschine simuliert wird, ohne daß Funktionselemente der Maschine tatsächlich betrieben werden. Dadurch sind installierte Programmabläufe an der Bedienblende der Waschmaschine demonstrierbar.

Bildlich gesehen liegen die normalen Betriebsprogramme einerseits und die Sonderbetriebsprogramme andererseits in verschiedenen Betriebsebenen. Einige der Bedienelemente können für jede dieser Betriebsebenen verwendet werden, wobei sie je nach Betriebsebene gleiche oder eine unterschiedliche Funktion haben können.

Durch die Erfindung soll die Aufgabe gelöst werden, das mißbräuchliche Auslösen und/oder das mißbräuchliche Unterbrechen von Funktionen und/oder Betriebsabläufen und/oder das mißbräuchliche Verändern von Parametern, wie z.B. Programmdauer, Betriebstemperatur und/oder Betriebsdrehzahl usw., durch unbefugte Personen durch Mittel zu vermeiden, welche eine große Variabilität in der Art und Funktion der Sicherung gegen Mißbrauch erlauben und derart ausführbar sind, daß Umgehungsmöglichkeiten am Haushaltgerät auch durch erwachsene Personen nicht ersichtlich sind.

Diese Aufgabe wird gemäß der Erfindung dadurch gelöst, daß durch Bedienen mindestens eines Bedienelementes in einer vorbestimmten, nur befugten Personen bekannten Betätigungskombination eine Sicherungsfunktion in der Steuereinrichtung aktivierbar ist, durch welche die normale Funktion von mindestens einem der Bedienelemente durch eine andere Funktion ersetzt wird, welche am Haushaltgerät für eine Bedienungsperson nicht angezeigt wird, so daß das Haushaltgerät nur durch eine Person bedienbar wird, welche die nicht angezeigte Sonderfunktion kennt.

Gemäß einer bevorzugten Ausführungsform der Erfindung enthält die Steuereinrichtung ein Sicherungsprogramm zur Sicherung gegen unbefugtes Bedienen. Dieses kann derart ausgeführt sein, daß das Haushaltgerät nicht eingeschaltet werden kann oder Programme nicht gewählt oder nicht gestartet werden können oder bestimmte Funktionen oder Programme auf ein unbefugtes Bedienen der Bedienelemente nicht ansprechen.

Das Sicherungsprogramm ist durch Betätigen von mindestens einem Bedienelement an der Bedienblende in einer vorbestimmten Betätigungskombination wahlweise aktivierbar oder deaktivierbar. Bei deaktiviertem Sicherungsprogramm haben die Bedienelemente ihre normale Funktion. Jedoch ist bei aktiviertem Sicherungsprogramm die normale Funktion von mindestens einem der Bedienelemente durch eine Sicherungsfunktion ersetzt.

Gemäß einer bevorzugten Ausführungsform der Erfindung ist das mindestens eine Bedienelement zum Aktivieren und/oder Deaktivieren des Sicherungsprogrammes ein Bedienelement, welches auch für die normalen Funktionen vorgesehen ist, so daß es eine Doppelfunktion hat.

Gemäß einer besonderen Ausführungsform der Erfindung ist mindestens eine Betriebsebene für mindestens einen normalen Betriebsprogramm-Modus und mindestens eine weitere Betriebsebene für mindestens einen Sonderbetriebsmodus vorgesehen, wobei je durch eine Geheim-Betätigungskombination von einem oder mehreren der Bedienelemente, die nur eingeweihten Personen bekannt sind, zwischen den Betriebsebenen umschaltbar ist. Das Sicherungsprogramm ist nur in der Betriebsebene des Sonderbetriebsmodus aktivierbar und/oder deaktivierbar. Dies hat den Vorteil, daß das Sicherungsprogramm nicht versehentlich aktiviert oder deaktiviert werden kann.

Gemäß einer bevorzugten Ausführungsform der Erfindung sind Anzeigemittel zur optischen Anzeige vorgesehen, ob das Sicherungsprogramm aktiviert oder deaktiviert ist.

Die Erfindung wird im folgenden mit Bezug auf die Zeichnungen anhand von bevorzugten Ausführungsformen der Erfindung als Beispiele beschrieben. In den Zeichnungen zeigen
- Fig. 1: schematisch eine Bedienblende einer Waschmaschine nach der Erfindung, welche stellvertretend für andere mögliche Maschinen nach der Erfindung dargestellt ist, beispielsweise Wäschetrockner oder Geschirrspüler,
- Fig. 2: eine schematische Darstellung, an welcher Stelle des Haushaltgerätes das Sicherungsprogramm zur Wirkung gebracht werden kann.

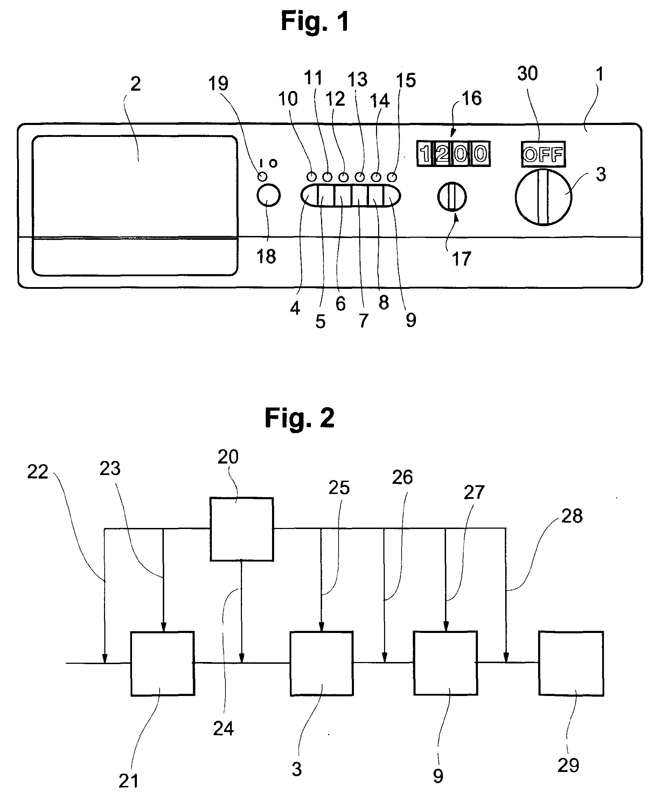

Die in Fig. 1 dargestellte Bedienblende 1 einer nicht im einzelnen dargestellten Waschmaschine enthält rechts neben einer Griffschale 2 für eine Waschmittelschublade mehrere Bedienungselemente, nämlich einen Drehwahlschalter 3 und Tasten 4 bis 9. Über den Tasten 4 bis 9 sind zur Quittierung einer Betätigung dieser Tasten Leuchtdioden 10 bis 15 angeordnet. Ein alphanumerisches Anzeigedisplay 16 dient zur Anzeige von Parametern, beispielsweise Trommeldrehzahlen beim Schleudern, die an einem darunter angeordneten Drehwahlschalter 17 einstellbar sind. Ein Taster 18 dient zum Einschalten und Ausschalten der elektronischen Steuereinrichtung und damit der gesamten Waschmaschine. Der Einschaltzustand 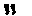 I" wird durch eine Leuchtanzeige 19 angezeigt. Hinter der Bedienblende 1 befindet sich eine elektronische Steuereinrichtung 20 (Fig. 2), mit welcher die Bedienelemente zusammenwirken zum Einschalten und Ausschalten der Waschmaschine, zum Aktivieren und Deaktivieren und gegebenenfalls zum Verändern von Programmen und Programmwerten bzw. Parametern.

Programmelemente, die bei Waschmaschinen und Geschirrspülmaschinen veränderbar sind, können beispielsweise folgende Funktionen sein: Wasserzulauf, Laugenheizung, Trommelbewegung, Laugenumwälzung, Abpumpen der Lauge. Bei Wäschetrocknem können solche Programmelemente die Trommelbewegung, Rechtslauf, Linkslauf, Prozessluftförderung, Kühlluftförderung und Kondensatabführung sein. Als veränderbare Parameter von Programmfunktionen sind bei Waschmaschinen und Geschirrspülmaschinen folgende Einstellungen möglich: Laugenniveau, Laugentemperatur, Zeitdauer, Zeittakte und Trommeldrehzahl. Bei Wäschetrocknern können folgende Parameter eingestellt werden: Prozesslufttemperatur, Restfeuchte, Zeitdauer, Zeittakte. Diese Angaben sind nur als Beispiele für Programmelemente und Parameter zu verstehen.

Zur Durchführung der elektrischen oder elektronischen oder programmgesteuerten Sicherungsfunktion können zusätzliche Bedienelemente vorgesehen sein oder gemäß bevorzugter Ausführungsform die für obige Funktionen bzw. Programme und Parameter vorgesehenen Bedienelemente verwendet werden, indem diesen eine zusätzliche Funktion auferlegt wird.

Die in die Steuereinrichtung 20 integrierte Sicherungsfunktion gegen unbefugte Maschinenbenutzung und/oder gegen Veränderung von Programmabläufen oder Parametern oder unbefugtes Abschalten von Programmen oder der gesamten Maschine kann je nach der gewünschten Sicherungsart in (stromaufwärts oder stromabwärts) dem zur Programmwahl dienenden Drehwahlschalter 3 oder der zum Programm-Start dienenden Taste 9 oder in einem allpoligen Schalter 21 zur Einschaltung und Ausschaltung der gesamten Stromzufuhr des Haushaltgerätes zur Wirkung gebracht werden. Dies ist in Fig. 2 in Richtung auf einen Stromverbraucher 29 (z.B. Heizung, Motor) hin (stromaufwärts) durch Wirkpfeile 22 bis 28 schematisch dargestellt.

Im folgenden werden einige Ausführungsformen der Erfindung als Beispiele beschrieben.

### 1. Beispiel:

Einer der Tasten 4 bis 9 ist die Sicherheitsfunktion zugeordnet, beispielsweise der Taste 4. Durch Drücken dieser Taste 4 in einer bestimmten Betätigungskombination wird eine Sicherungsfunktion eingeschaltet, z.B. ein Sicherungsprogramm aktiviert. Durch die gleiche oder eine andere Betätigungskombination der gleichen Taste 4, je nach Ausführungsform, wird die Sicherungsfunktion oder das Sicherungsprogramm deaktiviert. Der aktivierte Zustand wird von einem Display 30 in der Bedienblende 1 durch die Anzeige 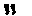 OFF" angezeigt, d.h. der Normalbetrieb ist ausgeschaltet. Der deaktivierte Zustand der Sicherungsfunktion wird von dem Display durch den Hinweis 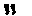 ON" angezeigt, d.h., daß die Maschine auf Normalbetrieb geschaltet ist. Bei aktivierter Sicherungsfunktion ist, je nach Ausführungsform, entweder das Haushaltgerät nicht einschaltbar oder die Steuereinrichtung 20 akzeptiert kein Anwählen von Betriebsprogrammen oder Betriebsprogramme sind nicht startbar. Gemäß anderer Ausführungsform kann die Sicherungsfunktion darin bestehen, daß aktivierte Programme nicht unterbrochen werden können bei Betätigung durch eine unbefugte Person.

### 2. Beispiel:

Die Sicherungsfunktion, z.B. ein Sicherungsprogramm, ist durch Betätigen von zwei Tasten der Tasten 4 bis 9 in einer vorbestimmten Betätigungskombination aktiviertbar und mit der gleichen oder einer anderen Betätigungskombination wieder deaktivierbar, je nach Ausführungsform. Die Betätigungskombination kann beispielsweise darin bestehen, daß die Taste 4 zuerst, dann die Taste 5 je einmal und danach beide Tasten gleichzeitig gedrückt werden müssen, um die Sicherungsfunktion zu aktivieren und/oder zu deaktivieren. Die Wirkungen sind die gleichen wie bei dem ersten Beispiel beschrieben.

### 3. Beispiel:

Die Aktivierung und/oder Deaktivierung der Sicherungsfunktion erfolgt durch eine Betätigungskombination bei der Betätigung von einer oder mehreren vorbestimmten der Tasten 4 bis 9 in Kombination mit einer bestimmten Einstellung des Drehwahlschalters 3 auf eine oder mehrere verschiedene Drehpositionen, die vorbestimmt sind. Die Wirkungen sind wieder die gleichen wie beim ersten Beispiel.

### 4. Beispiel:

a) Für dieses Beispiel werden folgende Annahmen getroffen:
   a1) Die Taste Nr. 6 ist eine 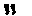 Start-"Taste zum Starten von gewählten Programmen (oder eine andere Taste mit anderer Funktion gemäß anderer Ausführungsform);
   a2) die Taste Nr. 7 ist eine 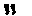 Signal-"Taste zur Einstellung der Lautstärke eines Signals bei Programmende eines Betriebsprogrammes (oder eine andere Taste mit anderer Funktion gemäß anderer Ausführungsform);
   a3) am Drehwahlschalter 3 ist ein Betriebsprogramm 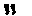 pflegeleicht extra trocken" wählbar (oder ein anderes Betriebsprogramm gemäß anderer Ausführungsform);
   a4) das Sicherungs-Display 30 liefert bei aktiviertem Sicherungsprogramm die Anzeige 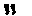 OFF" und bei deaktiviertem Sicherungsprogramm die Anzeige 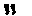 ON";
   a5) durch Betätigen von mindestens einer vorbestimmten der Tasten 4 bis 9 in einer vorbestimmten Betätigungskombination, welche nur eingeweihten Personen bekannt sind, kann das Haushaltgerät vom normalen Betriebsprogramm-Modus in einen Prüfprogramm-Modus geschaltet werden, in welchem die eingeweihte Person Prüfprogramme fahren kann; durch Betätigen der gleichen oder, gemäß anderer Ausführungsform, anderen Tasten in der gleichen oder einer anderen Betätigungskombination, welche wiederum nur den eingeweihten Personen bekannt sind, kann vom Prüfprogramm-Modus in den normalen Betriebsprogramm-Modus zurückgeschaltet werden.
b) Hierzu ist die Steuereinrichtung zur Durchführung folgender Funktionen ausgebildet:
   b1) Zur Aktivierung der in der Steuereinrichtung 20 enthaltenen Sicherungsfunktion muß vorab vom normalen Betriebsprogramm-Modus in den Prüfprogramm-Modus umgeschaltet werden durch Betätigen von vorbestimmten Tasten in einer vorbestimmten Betätigungskombination, welche nur einer eingeweihten Person (z.B. Kundendiensttechniker) bekannt ist; ferner Einstellen des Drehwahlschalters 3 auf das Programm 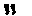 pflegeleicht extra trocken"; danach, je nach Ausführungsform nacheinander oder gleichzeitig, manuelles Betätigen der Start-Taste 6 und der Signal-Taste 7; dadurch erscheint im Sicherungsdisplay 30 die Anzeige 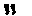 OFF", was bedeutet, daß die Sicherungsfunktion eingeschaltet ist und ein Betriebsprogramm im normalen Betriebsprogramm-Modus durch Betätigen der Start-Taste 6 allein nicht mehr gestartet werden kann; anschließend wird von der eingeweihten Person durch Betätigen der nur ihr bekannten Tastenkombination vom Prüfprogramm-Modus in den normalen Betriebsprogramm-Modus zurückgeschaltet;
   b2) jetzt kann im normalen Betriebsprogramm-Modus ein beliebiges Betriebsprogramm bei eingeschalteter Sicherung (Display 30 zeigt "OFF") gestartet werden durch
      1. Einstellen des Drehwahlschalters 3 auf ein gewünschtes Betriebsprogramm
      2. Starten des gewählten Betriebsprogrammes durch, je nach Ausführungsform gleichzeitiges oder aufeinanderfolgendes, manuelles Betätigen der Start-Taste 6 und der Signal-Taste 7 in einer vorbestimmten Betätigungskombination, die somit einen Geheim-Code darstellt (Start-Taste allein genügt jetzt nicht);
   b3) Deaktivierung der Sicherungsfunktion ist durch folgende Schritte möglich:
      1. Betätigen der vorbestimmten Tasten in der vorbestimmten Tastenkombination durch eine eingeweihte Person und dadurch Umschalten vom normalen Betriebsprogramm-Modus in den Prüfprogramm-Modus;
      2. Drehwahlschalter 3 auf das Programm 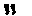 Pflegeleicht extra trocken" schalten;
      3. manuelles Betätigen der Start-Taste 6 und der Signal-Taste 7 in dieser oder einer anderen vorbestimmten Betätigungskombination;
      4. dadurch erscheint im Sicherungsdisplay 30 die Anzeige 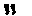 ON" als Zeichen, daß die Sicherungsfunktion ausgeschaltet und die Normalfunktion eingeschaltet ist;
      5. Rückkehr vom Prüfprogramm-Modus in den normalen Betriebsprogramm-Modus durch Betätigen der vorbestimmten Tasten in der vorbestimmten Tastenkombination, die nur den eingeweihten Personen (z.B. Kundendiensttechnikern) bekannt ist;
   b4) Starten eines beliebigen Betriebsprogrammes im normalen Betriebsprogramm-Modus ohne Sicherungsfunktion gegen unbeabsichtigtes Betätigen (Sicherungsdisplay 30 zeigt 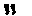 ON") durch
      1. Einstellen des Drehwahlschalters 3 auf ein gewünschtes Betriebsprogramm und
      2. Starten des Betriebsprogramms durch manuelles Betätigen der Start-Taste 6.

## Patentansprüche

1. Programmgesteuertes Haushaltgerät mit einer Steuereinrichtung (20), die mindestens einen Mikroprozessor enthält, und mit manuell betätigbaren Bedienelementen (3 bis 9) in einer Bedienblende (1) zum Bedienen der Steuereinrichtung und zum Aktivieren von mindestens einem Betriebsprogramm, **dadurch gekennzeichnet,** daß durch Bedienen mindestens eines Bedienelementes (3 bis 9) in einer vorbestimmten, nur befugten Personen bekannten Betätigungskombination eine Sicherungsfunktion in der Steuereinrichtung aktivierbar ist, durch welche die normale Funktion von mindestens einem der Bedienelemente durch eine andere Funktion ersetzt wird, welche am Haushaltgerät für eine Bedienungsperson nicht angezeigt wird, so daß das Haushaltgerät nur durch eine Person bedienbar wird, welche die nicht angezeigte Sonderfunktion kennt.

2. Haushaltgerät nach Anspruch 1, dadurch gekennzeichnet, daß die Sicherheitsfunktion in der Steuereinrichtung (20) durch ein Sicherungsprogramm definiert ist, welches durch eine geheime Betätigungskombination von mindestens einem der Bedienelemente (3 bis 9) aktivierbar und deaktivierbar ist.

3. Haushaltgerät nach Anspruch 1 oder 2, dadurch gekennzeichnet, daß das mindestens eine Bedienelement (3 bis 9) zum Aktivieren und Deaktivieren des Sicherungsprogramms ein Bedienelement ist, welches auch für die normalen Funktionen des Haushaltgerätes ohne Sicherungsfunktion vorgesehen ist, so daß das mindestens eine Bedienelement eine Doppelfunktion hat.

4. Haushaltgerät nach einem der vorhergehenden Ansprüche, dadurch gekennzeichnet, daß die Steuereinrichtung (20) eine Betriebsebene für einen normalen Betriebsprogramm-Modus und mindestens eine weitere Betriebsebene für mindestens einen Sonderprogramm-Modus aufweist, wobei je durch eine geheime, nur eingeweihten Personen bekannte Betätigungskombination der Bedienelemente (3 bis 9) zwischen dem Betriebsprogramm-Modus und dem Sonderprogramm-Modus umschaltbar ist, dadurch gekennzeichnet, daß die Sicherungsfunktion nur in dem Sonderprogramm-Modus aktivierbar und deaktivierbar ist.

5. Haushaltgerät nach einem der vorhergehenden Ansprüche, dadurch gekennzeichnet, daß Anzeigemittel (30) zur optischen Anzeige vorgesehen sind, ob die Sicherungsfunktion aktiviert oder deaktiviert ist.
